# EUROPÄISCHE PATENTANMELDUNG

(11) **EP 4 223 496 A1**
(43) Veröffentlichungstag der Anmeldung: **09.08.2023**
(21) Anmeldenummer: 23154895.9
(22) Anmeldetag: 03.02.2023
(51) Int. Cl.: B32B 1/08, A01N 59/20, B32B 25/04, B32B 25/14, C02F 1/50, C08K 5/00, F16L 9/133, F24D 17/00

(54) **FLUIDSCHLAUCH MIT EINER OBERFLÄCHEN-MODIFIZIERENDEN SUBSTANZ**

(30) Priorität: 08.02.2022 DE 102022102899
(71) Anmelder: VERITAS AG, 63571 Gelnhausen (DE)
(72) Erfinder: VAN HOOREN, Dr. Marc, 63579 Freigericht (DE); ROSEMANN, Michael, 63594 Hasselroth (DE)
(74) Vertreter: Patentship Patentanwaltsgesellschaft mbH

(57) **Zusammenfassung**

Die vorliegende Anmeldung betrifft einen Fluidschlauch (100) zum Leiten von Fluid, wobei der Fluidschlauch (100) als ein zumindest zweilagiger Fluidschlauch (100) ausgebildet ist, welcher eine Schlauchinnenschicht (101) und eine Schlauchaußenschicht (103) aufweist, wobei die Schlauchinnenschicht (101) einen Innenraum (105) des Fluidschlauchs (100) zur Aufnahme von Fluid umschließt, wobei die Schlauchinnenschicht (101) eine dem Innenraum (105) des Fluidschlauchs (100) zugewandte Innenoberfläche (101-1) aufweist, wobei die Schlauchinnenschicht (101) aus einem Kunststoff geformt ist, wobei innerhalb des Kunststoffs eine Oberflächen-modifizierende Substanz (107) diffusionsstabil eingebettet ist; und wobei die Oberflächen-modifizierende Substanz (107) ausgebildet ist, eine Oberflächeneigenschaft der Innenoberfläche (101-1) der Schlauchinnenschicht (101) zu verändern, um eine Besiedelung der Innenoberfläche (101-1) durch Mikroorganismen zu verhindern.

## Beschreibung

Die vorliegende Anmeldung betrifft einen Fluidschlauch mit einer Oberflächen-modifizierenden Substanz. Die vorliegende Anmeldung betrifft insbesondere einen Fluidschlauch mit einer Schlauchinnenschicht, welche einen Innenraum des Fluidschlauchs zur Aufnahme von Fluid umschließt, wobei die Schlauchinnenschicht aus Kunststoff geformt ist, in welchem die Oberflächen-modifizierende Substanz diffusionsstabil eingebettet ist.

Herkömmliche Fluidschläuche kommen in einer Vielzahl von Anwendungen im Haushaltsbereich und im industriellen Bereich zum Einsatz. In herkömmlichen Fluidschläuchen tritt oftmals das Problem auf, dass sich ein Biofilm auf der mit dem Fluid benetzten Schlauchinnenoberfläche bilden kann. Ein derartiger Biofilm wird durch Mikroorganismen, wie z.B. Bakterien, Algen, Pilzen, Viren und/oder Protozoen, gebildet, welche die Schlauchinnenoberfläche besiedeln und die Qualität des in dem Fluidschlauch geleiteten Fluids beeinträchtigen.

Entsprechende herkömmliche Fluidschläuche können als Wasserschläuche, insbesondere Trinkwasserschläuche, zum Leiten von Wasser, insbesondere Trinkwasser, ausgebildet sein, wobei die Bildung eines Biofilms, die Qualität des geleiteten Trinkwassers unter Umständen signifikant beinträchtigen kann.

Bei der Verwendung von Bioziden zur Beeinträchtigung der Bildung eines Biofilms gibt es jedoch aufgrund der bei der Verwendung von Wasserschläuchen relevanten Biozidverordnung signifikante Einschränkungen hinsichtlich der zulässigen Abgabekonzentration der entsprechenden Biozide in das geleitete Wasser. Insbesondere bei Trinkwasserschläuchen setzt die Biozidverordnung sehr hohe Maßstäbe, welche den Einsatz von Bioziden in Trinkwasserschläuchen oftmals vollständig verhindert, bzw. signifikant beeinträchtigt.

Beispielsweise ist die Verwendung von Silber als Biozid in Trinkwasserschläuchen aufgrund der Abgabe des für Menschen toxischen Silbers an durch die Trinkwasserschläuche geleitetes Trinkwasser gemäß der Trinkwasserverordnung verboten. Die Druckschrift EP 1 759 140 B1 offenbart den Einsatz von Silber als Biozid in einem Brauseschlauch. Die Druckschrift DE 422 6810 C1 offenbart den Einsatz von Silber als Biozid in Schläuchen für den medizinischen Bedarf. Die Druckschrift EP 1 450 124 A2 offenbart ein Rohr mit Silber als Biozid.

Die Druckschrift EP 2 077 976 B1 beschreibt eine bioaktive Ruthenium-haltige Beschichtung.

Es ist die der Anmeldung zugrundeliegende Aufgabe, einen Fluidschlauch bereitzustellen, wobei die Bildung von Biofilm in dem Fluidschlauch beeinträchtigt ist, und wobei die Abgabe von Bioziden an das durch den Fluidschlauch geleitete Fluid verhindert wird.

Diese Aufgabe wird durch die Gegenstände mit den Merkmalen nach den unabhängigen Ansprüchen gelöst. Vorteilhafte Ausführungsformen der Anmeldung sind Gegenstand der Figuren, der Beschreibung und der abhängigen Ansprüche.

Gemäß einem ersten Aspekt der Anmeldung wird die Aufgabe durch einen Fluidschlauch zum Leiten von Fluid gelöst, wobei der Fluidschlauch als ein zumindest zweilagiger Fluidschlauch ausgebildet ist, welcher eine Schlauchinnenschicht und eine Schlauchaußenschicht aufweist, wobei die Schlauchinnenschicht einen Innenraum des Fluidschlauchs zur Aufnahme von Fluid umschließt, wobei die Schlauchinnenschicht eine dem Innenraum des Fluidschlauchs zugewandte Innenoberfläche aufweist, wobei die Schlauchinnenschicht aus einem Kunststoff geformt ist, wobei innerhalb des Kunststoffs eine Oberflächen-modifizierende Substanz diffusionsstabil eingebettet ist, und wobei die Oberflächen-modifizierende Substanz ausgebildet ist, eine Oberflächeneigenschaft der Innenoberfläche der Schlauchinnenschicht zu verändern, um eine Besiedelung der Innenoberfläche durch Mikroorganismen zu verhindern.

Der Fluidschlauch ist insbesondere zum Leiten von wässrigem Fluid, insbesondere Wasser ausgebildet. Insbesondere ist der Fluidschlauch als ein Trinkwasserschlauch geformt, welcher ausgebildet ist Trinkwasser zu leiten.

Der Fluidschlauch kann in einer Vielzahl von Anwendungen im privaten und im industriellen Bereich zum Einsatz kommen, insbesondere im Bereich der Brauchwasserzuführung, der Trinkwasserzuführung, der Brauchwasserabführung, und der Wasseraufbereitung.

Der Fluidschlauch kann insbesondere auch als ein Fahrzeugfluidschlauch ausgebildet sein, welcher in einem Fahrzeug angeordnet ist, wobei der Fahrzeugfluidschlauch insbesondere in einem Wassereinspritzsystem zum Einspritzen von Wasser in einen Verbrennungsmotor des Fahrzeugs angeordnet ist, oder wobei der Fahrzeugfluidschlauch insbesondere in einem Batterietemperiersystem zum Temperieren einer elektrischen Fahrzeugbatterie eines Elektrofahrzeugs angeordnet ist.

Insbesondere ist der Fluidschlauch als ein flexibel verformbarer Fluidschlauch, insbesondere in alle drei Raumrichtungen flexibel verformbarer Fluidschlauch, ausgebildet.

Insbesondere ist die Schlauchaußenschicht des Fluidschlauchs radial außerhalb der Schlauchinnenschicht innerhalb des Fluidschlauchs angeordnet.

Die innerhalb des Kunststoffs der Schlauchinnenschicht des Fluidschlauchs diffusionsstabil eingebettete Oberflächen-modifizierende Substanz ist ausgebildet, eine Oberflächeneigenschaft der Innenoberfläche der Schlauchinnenschicht zu verändern, um eine Besiedelung der Innenoberfläche der Schlauchinnenschicht durch Mikroorganismen zu verhindern, insbesondere signifikant zu reduzieren.

Dadurch beeinträchtigt die durch die Oberflächen-modifizierende Substanz veränderte Oberflächeneigenschaft der Innenoberfläche der Schlauchinnenschicht an der Innenoberfläche der Schlauchinnenschicht vorhandene Mikroorganismen, wie z.B. Bakterien, Algen, Pilzen, Viren und/oder Protozoen. Durch die veränderte Oberflächeneigenschaft der Innenoberfläche der Schlauchinnenschicht kann die Bindung, insbesondere Adhäsion, der Mikroorganismen an die Innenoberfläche der Schlauchinnenschicht beeinträchtigt werden, und/oder können an der Innenoberfläche der Schlauchinnenschicht anheftende Mikroorganismen beeinträchtigt, insbesondere abgetötet oder inaktiviert, werden.

Dadurch wird der technische Vorteil erreicht, dass die Bildung eines von Mikroorganismen gebildeten Biofilms an der Innenoberfläche der Schlauchinnenschicht verhindert, bzw. die Menge des gebildeten Biofilms signifikant reduziert werden kann, um eine Verunreinigung des durch den Fluidschlauch geleiteten Fluids, insbesondere Wasser, zu verhindern.

Die Oberflächen-modifizierende Substanz umfasst insbesondere eine Oberflächen-polarisierende Substanz, welche ausgebildet ist, eine Polarisation der Innenoberfläche der Schlauchinnenschicht zu verändern, um eine Besiedelung der Innenoberfläche der Schlauchinnenschicht durch Mikroorganismen zu verhindern, insbesondere signifikant zu reduzieren.

Durch die Veränderung der Polarisation der Innenoberfläche der aus Kunststoff bestehenden Schlauchinnenschicht ändert sich die Verteilung von Ladungen, insbesondere positiven und negativen Ladungen, an der Innenoberfläche der Schlauchinnenschicht, wodurch an der Innenoberfläche der Schlauchinnenschicht haftende Mikroorganismen polarisiert werden können, insbesondere durch Übertragung der Ladungen von der polarisierten Innenoberfläche der Schlauchinnenschicht auf die Mikroorganismen. Durch die entsprechende Polarisation kann die Bindung, insbesondere Adhäsion, der Mikroorganismen an die Innenoberfläche beeinträchtigt werden, bzw. können die Mikroorganismen beeinträchtigt, insbesondere abgetötet oder inaktiviert, werden.

Ferner ist die Oberflächen-modifizierende, insbesondere Oberflächen-polarisierende Substanz, diffusionsstabil innerhalb des Kunststoffs der Schlauchinnenschicht eingebettet, so dass eine Diffusion der Oberflächen-modifizierenden Substanz aus dem Kunststoff der Schlauchinnenschicht in das Fluid verhindert, insbesondere signifikant reduziert wird. Somit kann die Oberflächen-modifizierende Substanz während des Betriebs des Fluidschlauchs nicht oder nur in äußerst geringem Umfang in das Fluid abgegeben werden, was den Einsatz des Fluidschlauchs gemäß der vorliegenden Anmeldung als Trinkwasserleitung ermöglicht.

Dadurch wird der technische Vorteil erreicht, dass eine Anreicherung der Oberflächen-modifizierenden Substanz in dem durch den Fluidschlauch geleiteten Fluid vermieden wird. Somit gilt gemäß einer europäischen Richtlinie eine diffusionsstabil innerhalb des Kunststoffs eingebettete Oberflächen-modifizierende Substanz gemäß der vorliegenden Offenbarung nicht als ein Biozid, so dass sich regulatorische Erleichterungen bei der Zulassung eines entsprechenden Fluidschlauchs, insbesondere Trinkwasserschlauchs ergeben, da die entsprechende Biozidverordnung hierbei nicht zum Tragen kommt.

Zudem wird durch die diffusionsstabile Einbettung der Oberflächen-modifizierenden Substanz in der Schlauchinnenschicht des Fluidschlauchs sichergestellt, dass die Konzentration der Oberflächen-modifizierenden Substanz innerhalb des Kunststoffs der Schlauchinnenschicht während des Betriebs des Fluidschlauchs nicht oder nur in äußerst geringem Umfang absinkt, so dass die Oberflächen-modifizierenden Eigenschaften der Oberflächen-modifizierenden Substanz für einen langen Zeitraum, insbesondere für mehrere Jahre, aufrechterhalten werden können.

In einer vorteilhaften Ausführungsform umfasst die Oberflächen-modifizierende Substanz eine Oberflächen-polarisierende Substanz, welche ausgebildet ist, eine Polarisation der Innenoberfläche der Schlauchinnenschicht zu verändern, um eine Besiedelung der Innenoberfläche durch Mikroorganismen zu verhindern, wobei die Oberflächen-polarisierende Substanz insbesondere eine Sterion-Substanz umfasst.

Dadurch wird der technische Vorteil erreicht, dass durch die Oberflächen-polarisierende Substanz, insbesondere Sterion-Substanz, eine für die Mikroorganismen nachteilige veränderte Polarisation der Innenoberfläche der Schlauchinnenschicht für einen langen Betriebszeitraum des Fluidschlauchs aufrechterhalten werden kann, ohne dass die Oberflächen-polarisierende Substanz, insbesondere Sterion-Substanz, hierbei an das Fluid in dem Fluidschlauch abgegeben wird, bzw. die Abgabe signifikant reduziert wird.

Hierbei kann die Oberflächen-polarisierende Substanz, insbesondere Sterion-Substanz, ausgebildet sein, eine bipolare Oberflächen-Polarisation der Innenoberfläche der Schlauchinnenschicht zu verursachen, um eine Besiedelung der Innenoberfläche durch Mikroorganismen zu verhindern, insbesondere signifikant zu reduzieren.

Eine veränderte Polarisation, insbesondere bipolare Oberflächen-Polarisation, der Innenoberfläche bewirkt eine Veränderung der Verteilung von Ladungen, insbesondere positiven und negativen Ladungen, auf der Innenoberfläche der Schlauchinnenschicht, welche auf Mikroorganismen an der Innenoberfläche übertragen werden können und dadurch die zelluläre Oberfläche der Mikroorganismen polarisieren können. Dadurch kann die Bindung der Mikroorganismen an die Innenoberfläche der Schlauchinnenschicht beeinträchtigt werden und/oder können die Mikroorganismen beeinträchtigt, insbesondere abgetötet oder inaktiviert werden, wodurch die Biofilmbildung an der Innenoberfläche der Schlauchinnenschicht beeinträchtigt wird.

In einer vorteilhaften Ausführungsform umfasst die Oberflächen-modifizierende Substanz, insbesondere Oberflächen-polarisierende Substanz, eine metallorganische Verbindung, wobei die metallorganische Verbindung insbesondere eine Kupfer-Thiolat-Verbindung umfasst.

Dadurch wird der technische Vorteil erreicht, dass die Verwendung einer metallorganischen Verbindung eine besonders vorteilhafte Polarisation der Innenoberfläche der Schlauchinnenschicht ermöglicht.

Eine metallorganische Verbindung umfasst hierbei insbesondere ein Metall, insbesondere ein Übergangsmetall, insbesondere Kupfer, welches eine positive Partialladung in der metallorganische Verbindung bereitstellt, und einen oder eine Mehrzahl von organischen Liganden, welche negative Partialladungen in der metallorganische Verbindung bereitstellen, um eine wirksame Polarisation der Innenoberfläche der Schlauchinnenschicht zu erreichen.

Der zumindest eine organische Ligand der metallorganischen Verbindung kann hierbei insbesondere Heteroatome, wie z.B. Schwefel, Stickstoff und/oder Sauerstoff umfassen, welche eine negative Partialladung in der metallorganischen Verbindung bereitstellen.

Der zumindest eine organische Ligand der metallorganischen Verbindung kann eine Kohlenwasserstoffverbindung mit zumindest einem Heteroatom, insbesondere Schwefel, Stickstoff und/oder Sauerstoff umfassen. Insbesondere umfasst der zumindest eine organische Ligand der metallorganischen Verbindung eine Thiolat-Verbindung.

Insbesondere ist die metallorganische Verbindung eine Kupfer-Thiolat-Verbindung, welche insbesondere auf einem Bariumsulfat-Substrat angeordnet ist.

In einer vorteilhaften Ausführungsform ist die Oberflächen-modifizierende Substanz, insbesondere Oberflächen-polarisierende Substanz, in der Schlauchinnenschicht in einem Konzentrationsbereich von 0,01 Gew.-% bis 1 Gew.-%, insbesondere von 0,025 Gew.-% bis 0,1 Gew.-% vorhanden.

Dadurch wird der technische Vorteil erreicht, dass durch die beanspruchten Konzentrationsbereiche der Oberflächen-modifizierenden Substanz eine ausreichende Beeinträchtigung der an der Innenoberfläche der Schlauchinnenschicht haftenden Mikroorganismen erreicht wird. Insbesondere beträgt die Konzentration der Oberflächen-modifizierenden Substanz, insbesondere Oberflächen-polarisierenden Substanz, in der Schlauchinnenschicht 0,045 Gew.-%.

Die Konzentrationsangaben beziehen sich hierbei auf das Gewicht der Oberflächen-modifizierenden Substanz, insbesondere Oberflächen-polarisierenden Substanz, insbesondere der metallorganischen Verbindung, in der Schlauchinnenschicht des Fluidschlauch in Bezug auf die Summe des Gewicht des Kunststoffs und des Gewichts der Oberflächen-modifizierenden Substanz in der Schlauchinnenschicht.

In einer vorteilhaften Ausführungsform ist die Oberflächen-modifizierende Substanz in die gesamte aus Kunststoff geformte Schlauchinnenschicht eingebettet, oder ist die Oberflächen-modifizierende Substanz in einem der Innenoberfläche zugewandten Bereich der aus Kunststoff geformten Schlauchinnenschicht eingebettet, wobei insbesondere der Bereich durch die Innenoberfläche begrenzt ist und sich von der Innenoberfläche aus in Richtung der Schlauchaußenschicht erstreckt.

Dadurch wird der technische Vorteil erreicht, dass ein Einbetten der Oberflächen-modifizierenden Substanz in die gesamte aus Kunststoff geformte Schlauchinnenschicht eine besonders einfache und kostengünstige Herstellung des Fluidschlauchs ermöglicht.

Wenn die Oberflächen-modifizierende Substanz hingegen nur in dem der Innenoberfläche zugewandten Bereich der Schlauchinnenschicht eingebettet wird, kann ein gezieltes Einbringen der Oberflächen-modifizierenden Substanz in räumlicher Nähe der Innenoberfläche sichergestellt werden, wodurch eine besonders wirksame Veränderung der Oberflächeneigenschaft der Innenoberfläche sichergestellt werden kann, ohne dass das gesamte Volumen der Schlauchinnenschicht mit der Oberflächen-modifizierenden Substanz versehen werden muss, wodurch sich Kostenersparnisse ergeben.

In einer vorteilhaften Ausführungsform weist die aus einem Kunststoff geformte Schlauchinnenschicht eine Kunststoff-Matrix auf, in welcher die Oberflächen-modifizierende Substanz diffusionsstabil eingebettet ist, wobei die Kunststoff-Matrix ausgebildet ist, ein Abgeben der Oberflächen-modifizierenden Substanz in das durch den Fluidschlauch durchleitbare Fluid zu reduzieren, insbesondere zu verhindern.

Dadurch wird der technische Vorteil erreicht, dass die Kunststoff-Matrix eine besonders vorteilhafte diffusionsstabile Einbettung der Oberflächen-modifizierenden Substanz innerhalb des Kunststoffs ermöglicht, so dass während der Betriebsdauer des Fluidschlauchs die Oberflächen-modifizierende Substanz nicht oder nur in äußerst geringem Umfang aus dem Kunststoff der Schlauchinnenschicht entweichen kann.

In einer vorteilhaften Ausführungsform umfasst der Kunststoff der Schlauchinnenschicht ein Elastomer, ein thermoplastisches Elastomer (TPE), ein thermoplastisches Elastomer-Vulkanisat (TPE-V), Acrylnitril-Butadien-Kautschuk (NBR), Naturkautschuk (NR), Ethylen-Propylen-Dien-Kautschuk (EPDM), Isobuten-Isopren-Kautschuk (IIR), Methyl-Vinyl-Silikon-Kautschuk (VMQ) und/oder einen flexiblen Fluorthermoplast (THV) aus thermoplastischem Elastomer (TPE), Hexafluorpropylen (HFP) und Polyvinylidenfluorid (VDF), wobei der Kunststoff der Schlauchinnenschicht insbesondere ein peroxidisch vernetztes thermoplastisches Elastomer-Vulkanisat (TPE-V) umfasst.

Dadurch wird der technische Vorteil erreicht, dass die genannten Kunststoffe der Schlauchinnenschicht nicht nur eine wirksame Beständigkeit gegenüber unterschiedlichen durch den Fluidschlauch geleiteten Fluiden aufweisen, sondern zudem eine besonders herausragende diffusionsstabile Einbettung der Oberflächen-modifizierenden Substanz in dem jeweiligen Kunststoff derart sicherstellen, dass die Oberflächen-modifizierende Substanz nicht oder nur in äußerst geringem Maße aus dem jeweiligen Kunststoff der Schlauchinnenschicht in das Fluid diffundieren kann.

Der genannten Kunststoffe der Schlauchinnenschicht umfassen hierbei insbesondere einen einzigen Kunststoff oder eine Mehrzahl von unterschiedlichen Kunststoffen.

Der Kunststoff der Schlauchinnenschicht kann einen Kunststoff umfassen, insbesondere ein Polyolefin und/oder Polyamid, insbesondere Polyethylen, hochdichtes Polyethylen (HDPE) oder Polypropylen.

Der Kunststoff der Schlauchinnenschicht kann ein thermoplastisches Elastomer (TPE) umfassen, insbesondere eine Mischung aus Polyamid (PA) oder Polyolefin, insbesondere Polypropylen (PP) oder Polyethylen (PE) oder Styrolblockcoplymere, vorzugsweise Styrol-Ethylen-Butylen-Styrol (SEBS), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM).

Der Kunststoff der Schlauchinnenschicht kann ein thermoplastisches Elastomer-Vulkanisat (TPE-V) umfassen, insbesondere eine Mischung aus Polyamid (PA) oder Polyolefin, insbesondere Polypropylen (PP) oder Polyethylen (PE) oder Styrolblockcoplymere, vorzugsweise Styrol-Ethylen-Butylen-Styrol (SEBS), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM), welche durch die Zugabe eines Vernetzungsmittels vulkanisiert ist.

Besonders vorteilhafte mechanische und diffusionsstabile Eigenschaften werden bei der Verwendung von thermoplastischem Elastomer-Vulkanisat (TPE-V) als Kunststoff der Schlauchinnenschicht erreicht, wobei sich peroxidisch vernetztes thermoplastisches Elastomer-Vulkanisat (TPE-V) als besonders vorteilhaft erwiesen hat, weil keine Auswaschungen in dem Fluid detektierbar sind.

Das peroxidisch vernetzte thermoplastische Elastomer-Vulkanisat (TPE-V) umfasst insbesondere ein Peroxid-Derivat, und/oder einen Co-Aktivator, als Vernetzungsmittel. Das Peroxid-Derivat umfasst hierbei insbesondere ein Alkyl-Aralkyl-Peroxid-Derivat, ein Diaralkyl-Peroxid-Derivat, ein Peroxyketal-Derivat und/oder ein Peroxyester-Derivat. Der Co-Aktivator umfasst hierbei insbesondere Triallylcyanurat (TAC), Triallylisocyanurat (TAIC), Trimethylolpropan-trimethacrylat (TRIM), Dimethylacrylat, Trimethylacrylat, Triazin und/oder Bismaleinimid.

In einer vorteilhaften Ausführungsform ist die Schlauchaußenschicht aus einem Kunststoff geformt, wobei der Kunststoff der Schlauchaußenschicht ein Elastomer, ein thermoplastisches Elastomer (TPE) ein thermoplastisches Elastomer-Vulkanisat (TPE-V), Acrylnitril-Butadien-Kautschuk (NBR), Styrol-Butadien-Kautschuk (SBR), Naturkautschuk (NR), Ethylen-Propylen-Dien-Kautschuk (EPDM), Chloropren-Kautschuk (CR), Methyl-Vinyl-Silikon-Kautschuk (VMQ) und/oder Epichlorhydrin-Kautschuk (ECO) umfasst.

Dadurch wird der technische Vorteil erreicht, dass die genannten Materialien eine wirksame Außenbeständigkeit des Fluidschlauchs gegen äußeren Einflüsse sicherstellen, wie z.B. gegen mechanische Einwirkungen, Temperatureinflüsse, und andere Einflüsse.

Die für den Kunststoff der Schlauchinnenschicht als bevorzugt gekennzeichneten Auswahlen für ein Elastomer, ein thermoplastisches Elastomer (TPE) und/oder ein thermoplastisches Elastomer-Vulkanisat (TPE-V) gelten uneingeschränkt auch als bevorzugte Auswahlen für den Kunststoff der Schlauchaußenschicht.

In einer vorteilhaften Ausführungsform weist der Fluidschlauch zumindest einen Festigkeitsträger auf, welcher zwischen der Schlauchaußenschicht und der Schlauchinnenschicht angeordnet ist.

Alternativ und insbesondere kann auch die Schlauchaußenschicht selbst als ein Festigkeitsträger ausgebildet sein.

Dadurch wird der technische Vorteil erreicht, dass durch die Verwendung eines Festigkeitsträgers der Fluidschlauch eine besonders hohe Druckstabilität erreicht, so dass durch einen entsprechenden mit einem Festigkeitsträger versehenen Fluidschlauch auch unter hohem Druck stehende Fluide geleitet werden können, ohne dass der Fluidschlauch beschädigt wird.

In einer vorteilhaften Ausführungsform ist der Festigkeitsträger als ein einlagiger oder mehrlagiger Festigkeitsträger ausgebildet, und weist der Festigkeitsträger insbesondere ein Gewebe, Geflecht, Gewirk, Gestrick und/oder eine spiralisierte Textileinlage auf.

Dadurch wird der technische Vorteil erreicht, dass je nach Druckbeständigkeitsanforderungen des Fluidschlauchs die optimalen Lagenstruktur des Festigkeitsträgers, bzw. die optimale Struktur des Festigkeitsträgers gewählt werden kann.

In einer vorteilhaften Ausführungsform weist der Festigkeitsträger aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon, auf.

Dadurch wird der technische Vorteil erreicht, dass die genannten Fasern eine besonders hohe Druckbeständigkeit des Festigkeitsträgers sicherstellen.

In einer vorteilhaften Ausführungsform weist der Fluidschlauch eine erste Zwischenschicht, welche zwischen der Schlauchaußenschicht und dem Festigkeitsträger angeordnet ist, auf, und/oder weist der Fluidschlauch eine zweite Zwischenschicht, welche zwischen der Schlauchinnenschicht und dem Festigkeitsträger angeordnet ist, auf.

Dadurch wird der technische Vorteil erreicht, dass die erste, bzw. zweite Zwischenschicht eine wirksame Einbettung des Festigkeitsträgers in dem Schlauchaufbau des Fluidschlauchs ermöglichen. Somit stellt die erste, bzw. zweite Zwischenschicht beispielsweise sicher, dass bei einer aus hohen Druckspitzen resultierenden Verformung des Festigkeitsträgers die Schlauchinnenschicht, bzw. die Schlauchaußenschicht des Fluidschlauchs nicht beschädigt werden. Insbesondere umfasst die erste und/oder zweite Zwischenschicht ein elastomeres Material, welches ausgebildet ist, eine Verformung des Festigkeitsträgers aufzunehmen. Zudem kann die Verwendung der erste Zwischenschicht zwischen der Schlauchaußenschicht und dem Festigkeitsträger und die Verwendung der zweiten Zwischenschicht zwischen der Schlauchinnenschicht und dem Festigkeitsträger einen wirksamen Haftverbund des Festigkeitsträgers mit den jeweils angrenzenden Schichten optimieren.

In einer vorteilhaften Ausführungsform umfasst die erste Zwischenschicht und/oder zweite Zwischenschicht ein Elastomer, ein thermoplastisches Elastomer (TPE), ein thermoplastisches Elastomer-Vulkanisat (TPE-V), Acrylnitril-Butadien-Kautschuk (NBR), Styrol-Butadien-Kautschuk (SBR), Naturkautschuk (NR), Ethylen-Propylen-Dien-Kautschuk (EPDM), Chloropren-Kautschuk (CR), Methyl-Vinyl-Silikon-Kautschuk (VMQ) und/oder Epichlorhydrin-Kautschuk (ECO).

Dadurch wird der technische Vorteil erreicht, dass durch die genannten Materialien eine wirksame Einbettung des Festigkeitsträgers in den Schlauchaufbau erreicht wird, und zudem eine gute Haftwirkung mit dem Festigkeitsträger, und der Schlauchinnenschicht, bzw. der Schlauchaußenschicht sichergestellt wird.

Die für den Kunststoff der Schlauchinnenschicht als bevorzugt gekennzeichneten Auswahlen für ein Elastomer, ein thermoplastisches Elastomer (TPE) und/oder ein thermoplastisches Elastomer-Vulkanisat (TPE-V) gelten uneingeschränkt auch als bevorzugte Auswahlen für den Kunststoff der ersten und/oder zweiten Zwischenschicht.

In einer vorteilhaften Ausführungsform weist die Schlauchinnenschicht eine Dicke von 0,2 mm bis 2 mm, bevorzugt 0,2 mm bis 1 mm, weiter bevorzugt 0,2 mm bis 0,5 mm, noch weiter bevorzugt 0,2 mm, auf.

Dadurch wird der technische Vorteil erreicht, dass die Schlauchinnenschicht mit einer sehr geringen Dicke ausgebildet werden kann, was die Dimensionen und damit die Herstellungskosten des Fluidschlauchs signifikant verringern. Trotz der relativ geringen Dicke der Schlauchinnenschicht wird dennoch eine wirksame Beständigkeit gegenüber dem durch den Fluidschlauch geleiteten Fluid sichergestellt.

In einer vorteilhaften Ausführungsform ist der Fluidschlauch als ein Extrusionsbauteil ausgebildet, wobei insbesondere die Schlauchaußenschicht radial außerhalb auf die Schlauchinnenschicht extrudiert ist.

Dadurch wird beispielsweise der technische Vorteil erreicht, dass ein als Extrusionsbauteil hergestellter Fluidschlauch einfach und kostengünstig, insbesondere in der Form flexibel, herstellbar ist.

Gemäß einem zweiten Aspekt der Anmeldung wird die Aufgabe durch ein Verfahren zum Herstellen eines zumindest zweilagigen Fluidschlauchs gelöst, wobei das Verfahren die folgenden Verfahrensschritte umfasst, Bereitstellen von einem Kunststoff, Bereitstellen von einer Oberflächen-modifizierenden Substanz, Mischen des Kunststoffs mit der Oberflächen-modifizierenden Substanz auf einem spezifischen Trägermaterial, um eine optimale Verteilung und Dosierung der Oberflächen-modifizierenden Substanz sicherzustellen, Schmelzen der Mischung umfassend den Kunststoff und die Oberflächen-modifizierende Substanz, um eine Kunststoffschmelze zu erhalten, Extrudieren der Kunststoffschmelze, um eine Schlauchinnenschicht aus Kunststoff zu erhalten, wobei innerhalb des Kunststoffs die Oberflächen-modifizierende Substanz diffusionsstabil eingebettet ist, Bereitstellen von einem weiteren Kunststoff, Schmelzen des weiteren Kunststoffs, um eine weitere Kunststoffschmelze zu erhalten, Extrudieren der weiteren Kunststoffschmelze, um eine radial außerhalb auf der Schlauchinnenschicht angeordnete Schlauchaußenschicht zu erhalten, und den zumindest zweilagigen Fluidschlauch herzustellen.

Dadurch wird beispielsweise der technische Vorteil erreicht, dass in der Kunststoffschmelze eine besonders wirksame Verteilung der Oberflächen-modifizierenden Substanz innerhalb des Kunststoffs sichergestellt werden kann, und dass durch das sich anschließende Abkühlen der Kunststoffschmelze während des Extrusionsvorgangs sichergestellt wird, dass die Oberflächen-modifizierende Substanz vorteilhaft in dem Kunststoff der Schlauchinnenschicht eingebettet ist. Durch den Extrusionsvorgang können der Fluidschlauch in einer großen Anzahl und mit einem geringen Kostenaufwand hergestellt werden, und zudem kann die Form des Fluidschlauchs flexibel gewählt werden.

Die für den Fluidschlauch gemäß dem ersten Aspekt beschriebenen vorteilhaften Ausführungsformen sind ebenfalls vorteilhafte Ausführungsformen für das Verfahren zum Herstellen eines Fluidschlauchs gemäß dem zweiten Aspekt.

Ausführungsbeispiele der Anmeldung sind in den Zeichnungen dargestellt und werden im Folgenden näher beschrieben.

Es zeigen:
- Fig. 1: eine schematische Ansicht eines Fluidschlauchs gemäß einer ersten Ausführungsform;
- Fig. 2: eine schematische Ansicht eines Fluidschlauchs gemäß einer zweiten Ausführungsform;
- Fig. 3: eine graphische Darstellung von Diffusionsexperimenten in Bezug auf unterschiedliche Kunststoffmaterialien;
- Figs. 4A, 4B: graphische Darstellungen von Kultivierungsexperimenten von Mikroorganismen in Bezug auf unterschiedliche Kunststoffmaterialien;
- Fig. 5: eine schematische Darstellung eines Verfahrens zum Herstellen eines Fluidschlauchs gemäß der vorliegenden Anmeldung;
- Fig. 6: eine schematische Ansicht eines Fluidschlauchs gemäß einer dritten Ausführungsform;
- Fig. 7: eine schematische Ansicht eines Fluidschlauchs gemäß einer vierten Ausführungsform; und
- Fig. 8: eine schematische Ansicht eines Fluidschlauchs gemäß einer fünften Ausführungsform.

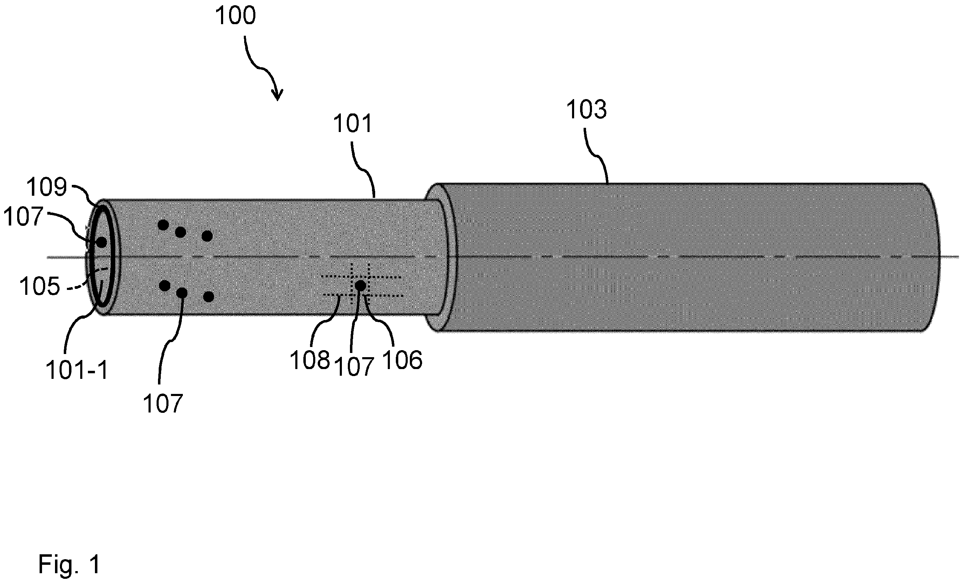

Fig. 1 zeigt eine schematische Ansicht eines Fluidschlauchs gemäß einer ersten Ausführungsform. Der Fluidschlauch 100 zum Leiten von Fluid ist insbesondere als ein Flüssigkeitsschlauch 100 zum Leiten von Flüssigkeit ausgebildet. Der Flüssigkeitsschlauch 100 kann als ein Wasserschlauch zum Leiten von wässriger Flüssigkeit ausgebildet sein. Der Flüssigkeitsschlauch 100 kann als ein Trinkwasserschlauch zum Leiten von Trinkwasser ausgebildet sein.

Wie in der Fig. 1 dargestellt ist, weist der Fluidschlauch 100 gemäß der ersten Ausführungsform eine Schlauchinnenschicht 101, und eine radial außerhalb der Schlauchinnenschicht 101 angeordnete Schlauchaußenschicht 103 auf. Die Schlauchinnenschicht 101 weist hierbei eine Innenoberfläche 101-1 auf, welche dem Innenraum 105 des Fluidschlauchs 100 zugewandt ist. Die Schlauchinnenschicht 101 umschließt den Innenraum 105 des Fluidschlauchs 100.

Der vorliegenden Anmeldung liegt das Problem zugrunde, dass bei herkömmlichen Fluidschläuchen, beispielsweise Wasserschläuchen zum Leiten von Fluid, beispielsweise von wässriger Flüssigkeit, oftmals eine hohe Keimbelastung in dem geleiteten Fluid auftreten kann. Dies ist insbesondere dann der Fall, wenn eine wässrige Flüssigkeit bei einer erhöhten Temperatur durch entsprechende herkömmliche Wasserschläuche geleitet wird, und/oder wenn eine wässrige Flüssigkeit ohne ausreichende Bewegung für einen längeren Zeitraum in den entsprechenden herkömmlichen Wasserschläuchen steht.

Eine in herkömmlichen Fluidleitungen, beispielsweise Wasserschläuchen, oftmals auftretende hohe Keimbelastung resultiert aus der starken Vermehrung von Mikroorganismen, wie z.B. Bakterien, Algen, Pilzen, Viren, und/oder Protozoen, bei für die Mikroorganismen günstigen Umgebungsbedingungen, wie beispielsweise bei einer für die Mikroorganismen optimalen Temperatur.

Hierbei tritt bei einem herkömmlichen Wasserschlauch oftmals das Problem auf, dass sich ein Biofilm in dem in den Wasserschläuchen aufgenommenem Wasser bilden kann. Ein derartiger Biofilm wird durch die in dem Wasser vorhandenen Mikroorganismen gebildet. Ein derartiger Biofilm, welcher eine Konzentration der Mikroorganismen aufweist, kann sich insbesondere an einer Innenoberfläche des herkömmlichen Wasserschlauchs bilden. Durch einen entsprechenden Biofilm an der Innenoberfläche von entsprechenden herkömmlichen Wasserschläuchen ist selbst nach einem vollständigen Austausch des in dem Wasserschlauch aufgenommenen Wassers eine weitere Verunreinigung von anschließend durch den Wasserschlauchs geleitetes Wasser durch die Mikroorganismen möglich.

Um das Auftreten eines Biofilms zu verhindern, bzw. die Menge des gebildeten Biofilms signifikant zu reduzieren, weist der Fluidschlauch 100 gemäß der vorliegenden Anmeldung eine Oberflächen-modifizierende Substanz 107 auf, welche eine Oberflächeneigenschaft der Innenoberfläche 101-1 der Schlauchinnenschicht 101 des Fluidschlauchs 100 derart verändert, um eine Besiedelung der Innenoberfläche 101-1 durch Mikroorganismen zu verhindern, insbesondere signifikant zu reduzieren.

Innerhalb des Kunststoffs der Schlauchinnenschicht 101 des Fluidschlauchs 100 ist die Oberflächen-modifizierende Substanz 107 diffusionsstabil eingebettet, wobei die eingebettete Oberflächen-modifizierende Substanz 107 in der Fig. 1 nur schematisch dargestellt ist. Der Kunststoff der Schlauchinnenschicht 101 ist durch die Oberflächen-modifizierende Substanz 107 nicht oder nur in äußerst geringem Ausmaß durchdringbar, so dass die Oberflächen-modifizierende Substanz 107 nicht oder nur in äußerst geringem Ausmaß an das durch den Fluidschlauch 100 geleitete Fluid abgegeben wird und somit in dem Kunststoff der Schlauchinnenschicht 101 verbleibt.

Wie in der Fig. 1 lediglich schematisch dargestellt ist, weist die aus einem Kunststoff geformte Schlauchinnenschicht 101 insbesondere eine Kunststoff-Matrix 108 mit Matrixaufnahmen 106 auf, in welcher, bzw. in welchen die Oberflächen-modifizierende Substanz 107 diffusionsstabil eingebettet ist, wobei die Kunststoff-Matrix 108 ausgebildet ist, ein Abgeben der Oberflächen-modifizierenden Substanz 107 in das durch den Fluidschlauch 100 geleitete Fluid zu verhindern, bzw. signifikant zu reduzieren.

Somit wirkt die Oberflächen-modifizierende Substanz 107 nicht direkt toxisch auf Mikroorganismen in dem Fluidschlauch 100, sondern modifiziert vielmehr die Oberflächeneigenschaften der Innenoberfläche 101-1 der Schlauchinnenschicht 101 des Fluidschlauchs 100 derart, dass eine Besiedelung der Innenoberfläche 101-1 durch Mikroorganismen verhindert, bzw. stark reduziert wird.

Insbesondere ist die Oberflächen-modifizierende Substanz 107 in die gesamte aus Kunststoff geformte Schlauchinnenschicht 101 eingebettet.

Alternativ ist die Oberflächen-modifizierende Substanz 107 insbesondere in einem der Innenoberfläche 101-1 zugewandten Bereich 109 der aus Kunststoff geformten Schlauchinnenschicht 101 eingebettet, wobei der Bereich 109 durch die Innenoberfläche 101-1 begrenzt ist und sich von der Innenoberfläche 101-1 aus in Richtung der Schlauchaußenschicht 103 erstreckt.

Der Bereich 109 erstreckt sich hierbei nicht vollständig von der Innenoberfläche 101-1 der Schlauchinnenschicht 101 zu dem Rand der Schlauchinnenschicht 101, welcher an der Schlauchaußenschicht 103 anliegt. Somit umfasst der Bereich 109 lediglich einen dünnen die Innenoberfläche 101-1 umlaufenden Abschnitt des radial inneren Teils der Schlauchinnenschicht 101, welcher in Kontakt mit dem im Innenraum 105 geleiteten Fluid steht.

Insbesondere weist der durch die Innenoberfläche 101-1 begrenzte und sich von der Innenoberfläche 101-1 aus in Richtung der Schlauchaußenschicht 103 erstreckende Bereich 109 eine Dicke zwischen 1 nm und 100 µm, insbesondere zwischen 1 nm und 10 µm, insbesondere zwischen 1 nm und 1 µm, insbesondere zwischen 1 nm und 100 nm auf, und ist damit deutlich dünner als die gesamte Dicke der Schlauchinnenschicht 101.

Insbesondere umfasst die Oberflächen-modifizierende Substanz 107 eine Oberflächen-polarisierende Substanz 107, welche ausgebildet ist, eine Polarisation der Innenoberfläche 101-1 der Schlauchinnenschicht 101 zu verändern, um eine Besiedelung der Innenoberfläche 101-1 durch Mikroorganismen zu verhindern, bzw. stark zu reduzieren.

Insbesondere wird durch die Veränderung der Polarisation der Innenoberfläche 101-1 eine bipolar polarisierte Innenoberfläche 101-1 erhalten, um eine Besiedelung der Innenoberfläche 101-1 durch Mikroorganismen zu verhindern, bzw. stark zu reduzieren.

Eine entsprechende bipolar polarisierte Innenoberfläche 101-1 der Schlauchinnenschicht 101 weist sowohl positive Partialladungen als auch negative Partialladungen auf, welche an der Innenoberfläche 101-1 anhaftende Mikroorganismen beeinträchtigen.

Insbesondere umfasst die Oberflächen-modifizierende Substanz 107, insbesondere Oberflächen-polarisierende Substanz 107 eine Sterion-Substanz, welche ausgebildet ist, eine Besiedelung der Innenoberfläche 101-1 durch Mikroorganismen zu verhindern, bzw. signifikant zu reduzieren, wobei die Sterion-Substanz insbesondere eine metallorganische Verbindung umfasst.

Eine Sterion-Substanz umfassend eine metallorganische Verbindung kann von der Firma SteriOne GmbH & Co. KG, Berlin, Deutschland, bezogen werden. Insbesondere kann ein Batch verwendet werden, in welchem die metallorganische Verbindung mit einem spezifischen Trägermaterial verwendet wird, um eine optimale Verteilung und Dosierung der metallorganischen Verbindung in dem Kunststoff der Schlauchinnenschicht 101 sicherzustellen.

Eine metallorganische Verbindung umfasst hierbei insbesondere ein Metall, insbesondere Übergangsmetall, insbesondere Kupfer, welches eine positive Partialladung in der metallorganische Verbindung bereitstellt, und einen oder eine Mehrzahl von organischen Liganden, welcher eine negative Partialladung in der metallorganische Verbindung bereitstellt, um eine wirksame Polarisation der Innenoberfläche 101-1 der Schlauchinnenschicht 101 zu erreichen.

Der zumindest eine organische Ligand der metallorganischen Verbindung kann hierbei insbesondere Heteroatome, wie z.B. Schwefel, Stickstoff und/oder Sauerstoff umfassen, welche eine negative Partialladung in der metallorganische Verbindung bereitstellen.

Insbesondere umfasst die metallorganische Verbindung eine Kupfer-Thiolat-Verbindung, welche insbesondere auf einem Bariumsulfat-Substrat angeordnet ist.

Die metallorganische Verbindung kann in der Schlauchinnenschicht 101 in einem Konzentrationsbereich von 0,1 Gew.-% bis 1 Gew.-%, insbesondere von 0,025 Gew.-% bis 0,1 Gew.-% vorhanden sein. Hier beziehen sich die angegebenen Konzentrationsbereiche auf das Gewicht der metallorganische Verbindung in der Schlauchinnenschicht 101 in Bezug auf die Summe aus dem Gewicht des Kunststoff und der metallorganischen Verbindung in der Schlauchinnenschicht 101.

Die Sterion-Substanz, welche eine metallorganische Verbindung umfasst, grenzt sich gegenüber herkömmlichen antimikrobiellen Wirkstoffen, wie beispielsweise Nanometallen, wie z.B. Silber, dadurch ab, dass die Sterion-Substanz nicht aus der Schlauchinnenschicht 101 in das in dem Innenraum 105 des Fluidschlauchs 100 geleitete Fluid entweicht, so dass eine Kontamination des Fluids mit antimikrobiellen Wirkstoffen verhindert wird, so dass der entsprechende Fluidschlauch 100 auch in Übereinstimmung mit der Biozidverordnung in Trinkwasserleitungen eingesetzt werden kann. Zudem nimmt die Wirksamkeit der Sterion-Substanz während der Betriebsdauer des Fluidschlauchs 100 nicht oder nur in geringem Maße ab.

Somit kann durch die Sterion-Substanz, welche eine metallorganische Verbindung umfasst, eine hohe antimikrobielle Wirksamkeit der Innenoberfläche 101-1 des Fluidschlauchs 100 während der Betriebsdauer des Fluidschlauchs 100 sichergestellt werden, ohne dass die Sterion-Substanz an das durch den Fluidschlauch 100 geleitete Fluid abgegeben wird.

Damit die Oberflächen-modifizierende Substanz 107 in die Schlauchinnenschicht 101 des Fluidschlauchs 100 eingebracht werden kann, wird der Kunststoff und die Oberflächen-modifizierende Substanz 107 insbesondere bereits bei der Herstellung der Schlauchinnenschicht 101 miteinander vermischt und anschließend aus der Mischung umfassend den Kunststoff und die Oberflächen-modifizierende Substanz 107 die Schlauchinnenschicht 101 geformt, insbesondere im Rahmen eines Extrusionsvorgangs.

Der Kunststoff der Schlauchinnenschicht 101 weist hierbei insbesondere einen einzigen Kunststoff oder eine Mehrzahl von unterschiedlichen Kunststoffen auf.

Der Kunststoff der Schlauchinnenschicht 101 kann ein Elastomer umfassen, insbesondere ein Polyolefin und/oder Polyamid, insbesondere Polyethylen, hochdichtes Polyethylen (HDPE) oder Polypropylen.

Der Kunststoff der Schlauchinnenschicht 101 kann ein thermoplastisches Elastomer (TPE) umfassen, insbesondere eine Mischung aus Polyamid (PA) oder Polyolefin, insbesondere Polypropylen (PP) oder Polyethylen (PE) oder Styrolblockcoplymere, vorzugsweise Styrol-Ethylen-Butylen-Styrol (SEBS), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM).

Der Kunststoff der Schlauchinnenschicht 101 kann ein thermoplastisches Elastomer-Vulkanisat (TPE-V) umfassen, insbesondere eine Mischung aus Polyamid (PA) oder Polyolefin, insbesondere Polypropylen (PP) oder Polyethylen (PE) oder Styrolblockcoplymere, vorzugsweise Styrol-Ethylen-Butylen-Styrol (SEBS), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM), welche durch die Zugabe eines Vernetzungsmittels vulkanisiert ist.

Der Kunststoff der Schlauchinnenschicht 101 kann ferner einen der folgenden Kunststoffe umfassen, Acrylnitril-Butadien-Kautschuk (NBR), Naturkautschuk (NR), Ethylen-Propylen-Dien-Kautschuk (EPDM), Isobuten-Isopren-Kautschuk (IIR), Methyl-Vinyl-Silikon-Kautschuk (VMQ) und/oder einen flexiblen Fluorthermoplast (THV) aus thermoplastischem Elastomer (TPE), Hexafluorpropylen (HFP) und Polyvinylidenfluorid (VDF).

Insbesondere umfasst der Kunststoff der Schlauchinnenschicht 101 ein peroxidisch vernetztes thermoplastisches Elastomer-Vulkanisat (TPE-V)

Das peroxidisch vernetzte thermoplastische Elastomer-Vulkanisat (TPE-V) der Schlauchinnenschicht 101 umfasst insbesondere ein Peroxid-Derivat, und/oder einen Co-Aktivator, wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, und/oder wobei der Co-Aktivator insbesondere Triallylcyanurat (TAC), Triallylisocyanurat (TAIC), Trimethylolpropan-trimethacrylat (TRIM), Dimethylacrylat, Trimethylacrylat, Triazin und/oder Bismaleinimid umfasst.

Auch der Kunststoff der Schlauchaußenschicht 103 kann ein Elastomer, ein thermoplastisches Elastomer (TPE) und/oder ein thermoplastisches Elastomer-Vulkanisat (TPE-V) umfassen, wobei insbesondere die entsprechenden für die Schlauchinnenschicht 101 genannten bevorzugten Auswahlen von Elastomer, TPE und/oder TPE-V auch als entsprechende Auswahlen von Elastomer, TPE und/oder TPE-V der Schlauchaußenschicht 103 gelten.

Der Kunststoff der Schlauchinnenschicht 103 kann ferner einen der folgenden Kunststoffe umfassen, Acrylnitril-Butadien-Kautschuk (NBR), Styrol-Butadien-Kautschuk (SBR), Naturkautschuk (NR), Ethylen-Propylen-Dien-Kautschuk (EPDM), Chloropren-Kautschuk (CR), Methyl-Vinyl-Silikon-Kautschuk (VMQ) und/oder Epichlorhydrin-Kautschuk (ECO).

Somit können durch das Einbetten der Oberflächen-modifizierenden Substanz 107 in den Kunststoff der Schlauchinnenschicht 101 Mikroorganismen an der Innenoberfläche 101-1 der Schlauchinnenschicht 101 wirksam beeinträchtigt werden, und die Bildung eines Biofilms in dem Fluidschlauch 100 kann verhindert werden, bzw. signifikant reduziert werden.

Der Fluidschlauch 100 umfasst insbesondere einen Trinkwasserschlauch oder einen Brauchwasserschlauch, welcher beispielsweise im Haushaltsbereich oder auch im industriellen Bereich in einer Vielzahl von Anwendungen eingesetzt werden kann.

Alternativ kann der Fluidschlauch 100 auch einen Wasserschlauch 100 umfassen, welcher im Fahrzeugbereich eingesetzt werden kann, insbesondere in einem Wassereinspritzsystem eines Kraftfahrzeugs, und/oder in einem Batterietemperierungssystem eines Fahrzeugs, insbesondere Elektrofahrzeugs.

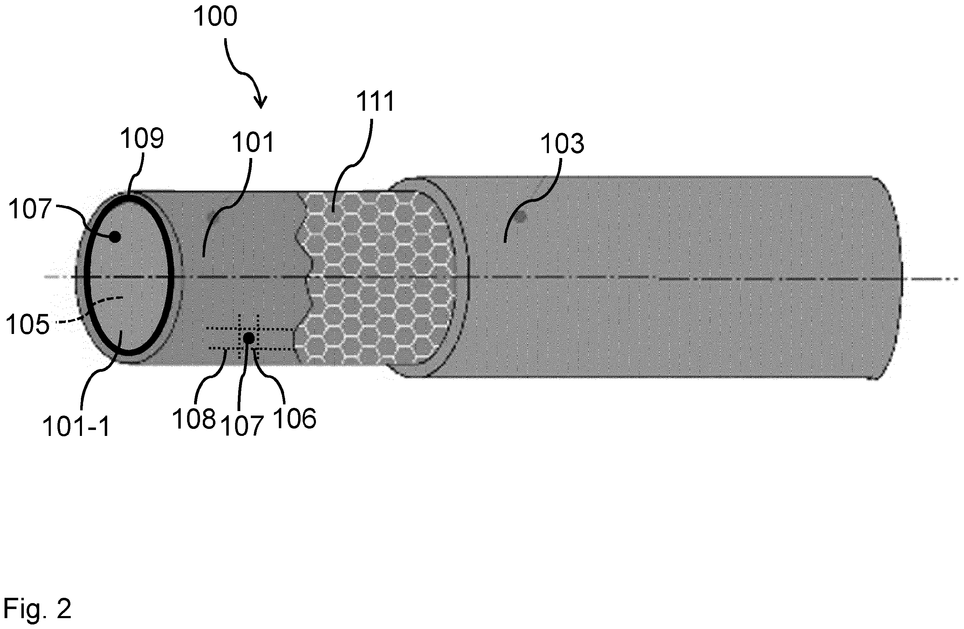

Fig. 2 zeigt eine schematische Ansicht eines Fluidschlauchs gemäß einer zweiten Ausführungsform.

Der in Fig. 2 dargestellte Fluidschlauch 100 gemäß der zweiten Ausführungsform unterscheidet sich von dem in der Fig. 1 dargestellten Fluidschlauch 100 gemäß der ersten Ausführungsform lediglich darin, dass in dem in Fig. 2 dargestellten Fluidschlauch 100 zwischen der Schlauchinnenschicht 101 und der Schlauchaußenschicht 103 ein Festigkeitsträger 111 angeordnet ist, welcher ausgebildet ist, mechanische Belastungen aufzunehmen, welche durch das Leiten von Fluid mit hohem Druck durch den Fluidschlauch 100 auftreten. Dadurch ist der Fluidschlauch 100 gemäß der zweiten Ausführungsform auch für Hochdruckanwendungen geeignet.

Der Festigkeitsträger 111 kann als ein einlagiger oder mehrlagiger Festigkeitsträger 111 ausgebildet sein, wobei der Festigkeitsträger 111 insbesondere ein Gewebe, Gewirk, Geflecht, Gestrick, und/oder eine spiralisierte Textileinlage aufweist.

Der Festigkeitsträger 111 kann aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon umfassen.

Auch wenn dies in Fig. 2 nicht dargestellt ist, kann der Fluidschlauch 100 optional eine erste Zwischenschicht umfassen, welche zwischen der Schlauchaußenschicht 103 und dem Festigkeitsträger 111 angeordnet ist, und/oder kann der Fluidschlauch 100 eine zweite Zwischenschicht umfassen, welche zwischen der Schlauchinnenschicht 101 und dem Festigkeitsträger 111 angeordnet ist.

Die erste Zwischenschicht und/oder zweite Zwischenschicht ermöglicht ein wirksames Einbetten des Festigkeitsträgers 111 zwischen der Schlauchinnenschicht 101 und der Schlauchaußenschicht 103 im Rahmen eines wirksamen Haftverbunds, und zudem ein Aufnehmen von Verformungen des Festigkeitsträgers 111 durch die entsprechende Zwischenschicht.

Hierbei kann die erste und/oder zweite Zwischenschicht insbesondere ein Elastomer, ein thermoplastisches Elastomer (TPE) und/oder ein thermoplastisches Elastomer-Vulkanisat (TPE-V) umfassen, wobei die bevorzugten Auswahlen eines Elastomers, eines thermoplastischen Elastomers (TPE) und/oder eines thermoplastisches Elastomer-Vulkanisats (TPE-V) der ersten und/oder zweiten Zwischenschicht den entsprechenden bevorzugten Auswahlen von Elastomer, TPE und/oder TPE-V der Schlauchinnenschicht 101 entsprechen.

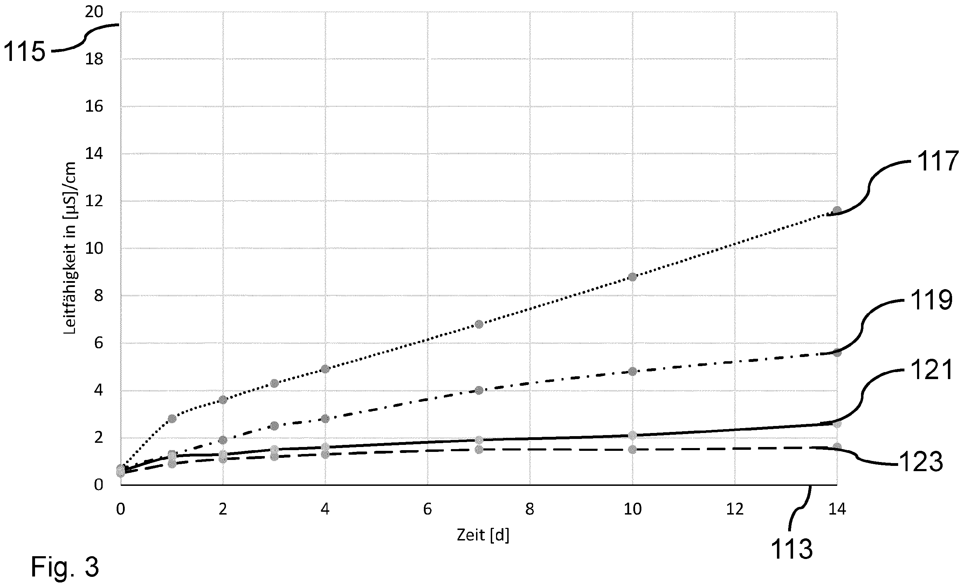

Fig. 3 zeigt eine graphische Darstellung von Diffusionsexperimenten in Bezug auf unterschiedliche Kunststoffmaterialien.

In den in Fig. 3 dargestellten Diffusionsexperimenten wurden unterschiedliche Kunststoffmaterialien in einer aus destilliertem Wasser bestehenden Testlösung in einem Weithalskolben bei einer Temperatur von 80 °C gelagert und über einen Zeitraum von mehreren Tagen die Erhöhung der elektrischen Leitfähigkeit der jeweiligen Testlösung gemessen, um daraus einen Rückschluss auf die Diffusionsneigung von Ionen aus den jeweiligen unterschiedlichen Kunststoffmaterialien in die jeweilige Testlösung ziehen zu können.

Entlang der in Fig. 3 gezeigten Abszissenachse 113 ist die Zeit in Tagen (d) angetragen, und entlang der in Fig. 3 gezeigten Ordinatenachse 115 ist die elektrische Leitfähigkeit der Testlösung in µS/cm angegeben.

Die in der Fig. 3 dargestellte erste Kurve 117 zeigt den Leitfähigkeitsverlauf der Testlösung mit einer darin gelagerten Probe aus Polyamid 66 (PA 66) Thermoplast-Kunststoff über einen Zeitraum von 14 Tagen.

Die in der Fig. 3 dargestellte zweite Kurve 119 zeigt den Leitfähigkeitsverlauf der Testlösung mit einer darin gelagerten Probe aus Polyphenylensulfid (PPS) Thermoplast-Kunststoff über einen Zeitraum von 14 Tagen.

Die in der Fig. 3 dargestellte dritte Kurve 121 zeigt den Leitfähigkeitsverlauf der Testlösung mit einer darin gelagerten Probe aus Ethylen-Propylen-Dien-Kautschuk (EPDM) Elastomer-Kunststoff über einen Zeitraum von 14 Tagen.

Die in der Fig. 3 dargestellte vierte Kurve 123 zeigt den Leitfähigkeitsverlauf der Testlösung mit einer darin gelagerten Probe aus thermoplastischen Elastomer-Vulkanisat (TPV) Kunststoff über einen Zeitraum von 14 Tagen.

Aus der Fig. 3 kann anhand des relativ starken Anstiegs der elektrischen Leitfähigkeit gemäß der ersten Kurve 117 und der zweiten Kurve 119 darauf geschlossen werden, dass in den verwendeten Thermoplast-Kunstoffen Polyamid 66 (PA 66) und Polyphenylensulfid (PPS) vorhandene Ionen eine relativ hohe Neigung zur Diffusion in die jeweilige Testlösung aufweisen.

Im Gegensatz dazu weist die dritte Kurve 121 und die vierte Kurve 123 einen relativ geringen Anstieg der elektrischen Leitfähigkeit auf, so dass in dem Elastomer-Kunststoff Ethylen-Propylen-Dien-Kautschuk (EPDM) und in dem thermoplastischen Elastomer-Vulkanisat (TPV) vorhandene Ionen auch nach einem Zeitraum von 14 Tagen nur in einem sehr geringen Ausmaß in die Testlösung diffundiert sind.

Zudem eignet sich der Elastomer-Kunststoff Ethylen-Propylen-Dien-Kautschuk (EPDM) und das thermoplastisches Elastomer-Vulkanisat (TPV) aufgrund der flexiblen Eigenschaften vorteilhaft für einen Einsatz in einer Schlauchinnenschicht 101 eines Fluidschlauchs 100 gemäß der in Fig. 1 dargestellten ersten Ausführungsform, bzw. der in Fig. 2 dargestellten zweiten Ausführungsform, so dass dadurch flexible Fluidschläuche 100 mit einer entsprechenden Schlauchinnenschicht 101 erhalten werden können, welche eine äußerst geringe Tendenz aufweisen, dass in den entsprechenden Kunststoffen enthaltende Ionen in das durch die Fluidschläuche 100 geleitete Fluid hineindiffundieren.

Hierbei verhindert das thermoplastischen Elastomer-Vulkanisat (TPV) gemäß der vierten Kurve 123 eine Diffusion von Ionen aus dem Kunststoff in die Testlösung während des Untersuchungszeitraums von 14 Tagen fast vollständig und eignet sich deshalb in besonderem Maße als Kunststoff für eine Schlauchinnenschicht 101 eines Fluidschlauchs 100.

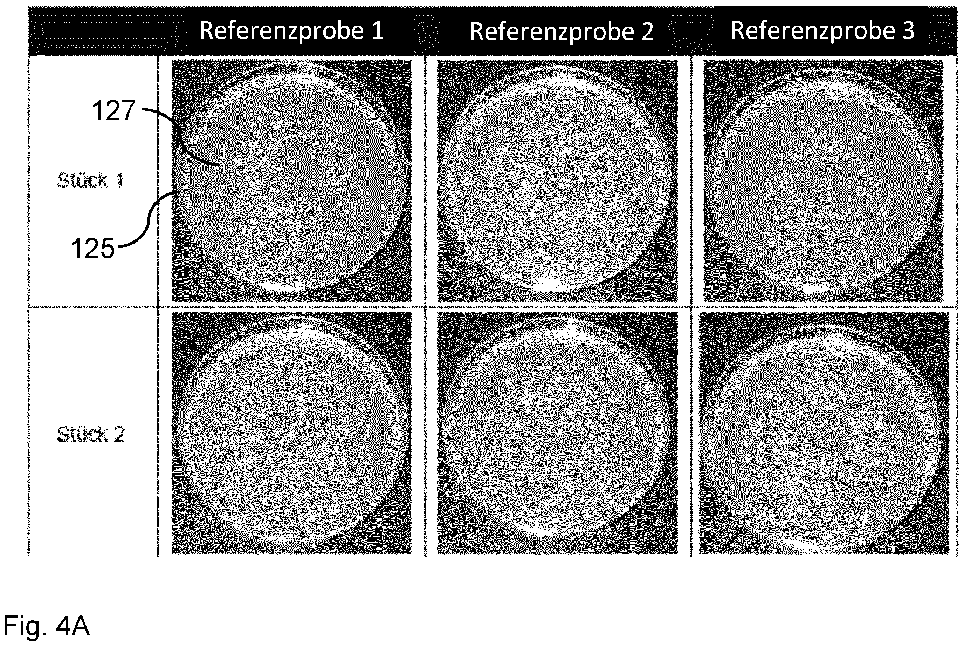

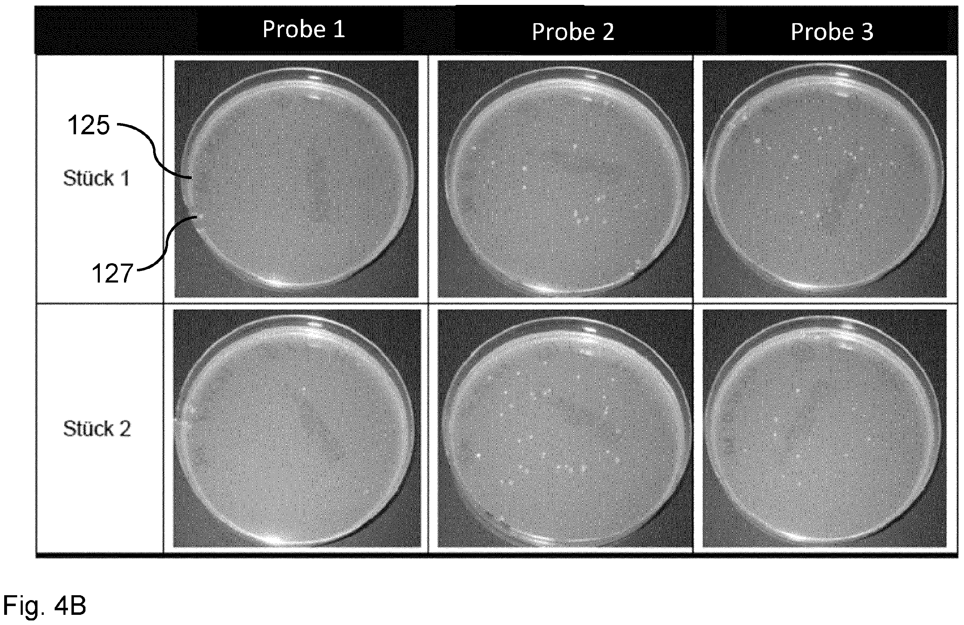

Figs. 4A, 4B zeigen graphische Darstellungen von Kultivierungsexperimenten von Mikroorganismen in Bezug auf unterschiedliche Kunststoffmaterialien.

Um die antibakterielle Wirkung von Kunststoffmaterialien gemäß der vorliegenden Anmeldung zu untersuchen, wurde in aus unterschiedlichen Kunststoffmaterialien bestehenden Behältern destilliertes Wasser über einen Zeitraum von 14 Tagen bei einer Temperatur von 37°C gelagert. Zu Beginn des 14-tägigen Zeitraums wurde eine Inokulation der jeweiligen Wassermengen mit dem Bakterium Pseudomonas aeruginosa DSM 939 durchgeführt, um ein Bakterienwachstum innerhalb der jeweiligen Behälter anzuregen.

Nach dem Zeitraum von 14 Tagen wurde die Behälter entleert, und wurde aus den Behältern jeweils Probenstücke herausgeschnitten und jeweils in eine Testlösung aus destilliertem Wasser überführt, um an der Oberfläche des jeweiligen Probenstücke haftenden Biofilm, welcher die entsprechenden Bakterien umfasst, abzulösen und in die jeweilige Testlösung zu überführen.

Anschließend wurde Proben der jeweiligen Testlösungen jeweils auf PCA-Agarplatten 125 ausplattiert und die PCA-Agarplatten 125 wurden für 24 Stunden bei 37 °C gelagert, um das Wachstum von Bakterienkulturen 127 auf den PCA-Agarplatten 125 zu initiieren. Die PCA-Agarplatten 125 und die Bakterienkulturen 127 sind in den Figuren 4A und 4B lediglich exemplarisch markiert. Anschließend wurde die Zahl der Bakterienkulturen auf den jeweiligen PCA-Agarplatten ausgezählt und miteinander verglichen, um einen Vergleich der antibakterielle Wirkung der verwendeten Kunststoffmaterialien zu ermöglichen.

Die in Fig. 4A gezeigte Referenzprobe 1, Referenzprobe 2, und Referenzprobe 3 beziehen sich auf drei unterschiedliche Probestücke, welche aus einem einzigen Kunststoffbehälter herausgeschnitten wurden, wobei der Kunststoff des Kunststoffbehälters hochdichtes Polyethylen (HDPE) umfasst. Es wurde für jedes Probestück jeweils ein Doppelexperiment durchgeführt, wie durch die Bezeichnung "Stück 1" und "Stück 2" in der Fig. 4A gezeigt ist.

Die in Fig. 4B gezeigte Probe 1, Probe 2, und Probe 3 beziehen sich auf drei unterschiedliche Probestücke, welche aus einem einzigen Kunststoffbehälter herausgeschnitten wurden, wobei der Kunststoff des Kunststoffbehälters hochdichtes Polyethylen (HDPE) umfasst, in welchem eine metallorganische Kupferverbindung als Oberflächen-modifizierende, bzw. Oberflächen-polarisierende Substanz 107, mit einer Konzentration von 0,045 Gew.-% in Bezug auf das Endprodukt aufgenommen ist.

Es wurde für jedes Probestück jeweils ein Doppelexperiment durchgeführt, wie durch die Bezeichnung "Stück 1" und "Stück 2" in der Fig. 4B gezeigt ist.

Die in den Experimenten gemäß der Fig. 4B verwendete metallorganische Kupferverbindung umfasst insbesondere eine Kupfer-Thiolat-Verbindung auf einem Bariumsulfat-Träger.

Nach einem Auszählen der Bakterienkulturen 127 auf den in den Figuren 4A und 4B dargestellten PCA-Agarplatten 125, kann man erkennen, dass die in der Fig. 4B dargestellten PCA-Agarplatten 125 der Proben 1, 2 und 3 im Vergleich zu den in der Fig. 4A dargestellten PCA-Agarplatten 125 der Referenzproben 1, 2 und 3 eine deutlich reduziertere Anzahl an Bakterienkolonien 127 aufweisen. Insbesondere beträgt die Reduktion der Anzahl der Bakterienkolonien 127 gemäß der Fig. 4B mehr als 99% im Vergleich zu der Anzahl der Bakterienkolonien 127 gemäß der Fig. 4A.

Somit bewirkt die Verwendung der gemäß den Experimenten der Fig. 4B verwendeten metallorganischen Kupferverbindung, insbesondere Kupfer-Thiolat, in dem Kunststoff des Behälters eine signifikante Beeinträchtigung des Bakterienwachstums auf der Innenoberfläche des entsprechenden Behälters, wobei die Beeinträchtigung auf dem Oberflächen-polarisierenden Effekt der metallorganischen Kupferverbindung, insbesondere dem Kupfer-Thiolat, beruht.

Hierbei stellt das Kupfer-Zentrum der metallorganischen Kupferverbindung eine positive Partialladung bereit, wobei die entsprechenden Liganden, insbesondere die Thiolat-Reste, der metallorganischen Kupferverbindung eine negative Partialladung bereitstellen, so dass durch die metallorganische Kupferverbindung eine Polarisation, insbesondere eine bipolare Polarisation, der Kunststoffoberfläche erreicht wird, welche sich nachteilig auf die Besiedelung der Kunststoffoberfläche mit Mikroorganismen auswirkt.

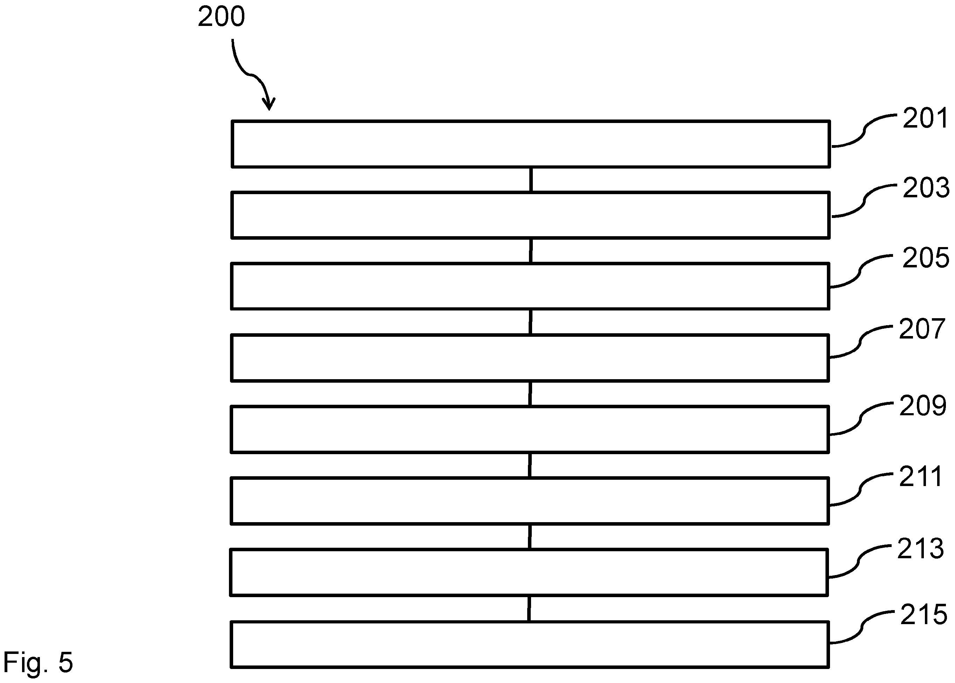

Fig. 5 zeigt eine schematische Darstellung eines Verfahrens zum Herstellen eines Fluidschlauchs.

Das Verfahren 200 als umfasst als ersten Verfahrensschritt das Bereitstellen 201 von einem Kunststoff und als zweiten Verfahrensschritt das Bereitstellen 203 von einer Oberflächen-modifizierenden Substanz 107.

Als dritten Verfahrensschritt umfasst das Verfahren 200 das Mischen 205 des Kunststoffs mit der Oberflächen-modifizierenden Substanz 107 auf einem spezifischen Trägermaterial, um eine optimale Verteilung und Dosierung der Oberflächen-modifizierenden Substanz 107 sicherzustellen.

Als vierten Verfahrensschritt umfasst das Verfahren 200 das Schmelzen 207 der Mischung umfassend den Kunststoff und die Oberflächen-modifizierende Substanz 107, um eine Kunststoffschmelze zu erhalten.

Das Verfahren 200 umfasst als fünften Verfahrensschritt das Extrudieren 209 der Kunststoffschmelze, um eine Schlauchinnenschicht 101 aus Kunststoff zu erhalten, wobei innerhalb des Kunststoffs die Oberflächen-modifizierende Substanz 107 diffusionsstabil eingebettet ist.

Das Verfahren 200 umfasst als sechsten Verfahrensschritt das Bereitstellen 211 von einem weiteren Kunststoff.

Das Verfahren 200 umfasst als siebten Verfahrensschritt das Schmelzen 213 des weiteren Kunststoffs, um eine weitere Kunststoffschmelze zu erhalten.

Das Verfahren 200 umfasst als achten Verfahrensschritt das Extrudieren 215 der weiteren Kunststoffschmelze, um eine radial außerhalb auf der Schlauchinnenschicht 101 angeordnete Schlauchaußenschicht 103 aus dem weiteren Kunststoff zu erhalten, und den zumindest zweilagigen Fluidschlauch 100 herzustellen.

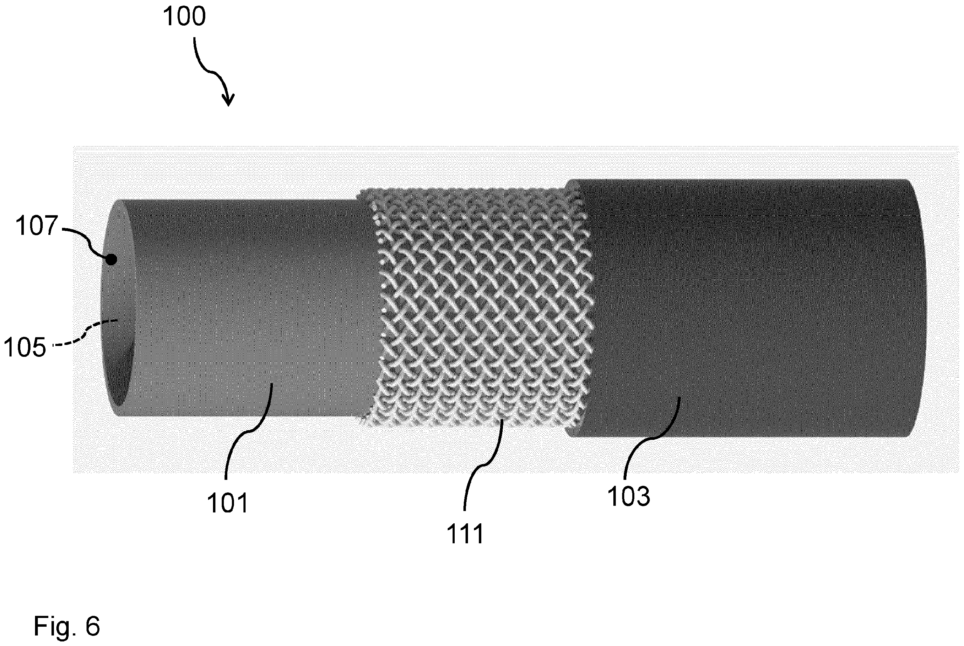

Fig. 6 zeigt eine schematische Ansicht eines Fluidschlauchs gemäß einer dritten Ausführungsform.

Der in Fig. 6 dargestellte Fluidschlauch 100 gemäß der dritten Ausführungsform weist analog zum Fluidschlauch 100 gemäß der in Fig. 2 dargestellten zweiten Ausführungsform eine Schlauchinnenschicht 101, eine Schlauchaußenschicht 103 und einen zwischen der Schlauchinnenschicht 101 und der Schlauchaußenschicht 103 angeordneten Festigkeitsträger 111 auf. Der Festigkeitsträger 111 ist hierbei ausgebildet, mechanische Belastungen aufzunehmen, welche durch das Leiten von Fluid mit hohem Druck durch den Fluidschlauch 100 auftreten. Dadurch ist der Fluidschlauch 100 gemäß der zweiten Ausführungsform auch für Hochdruckanwendungen geeignet.

Der Festigkeitsträger 111 kann als ein einlagiger oder mehrlagiger Festigkeitsträger 111 ausgebildet sein, wobei der Festigkeitsträger 111 insbesondere ein Gewebe, Gewirk, Geflecht, Gestrick, und/oder eine spiralisierte Textileinlage aufweist.

Der Festigkeitsträger 111 kann aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon umfassen.

Der Kunststoff der Schlauchinnenschicht 101 kann ein Elastomer, ein thermoplastisches Elastomer (TPE) und/oder ein thermoplastisches Elastomer-Vulkanisat (TPE-V) umfassen, wobei der Kunststoff der Schlauchinnenschicht 101 insbesondere ein peroxidisch vernetztes thermoplastisches Elastomer-Vulkanisat (TPE-V) umfasst.

Der Kunststoff der Schlauchinnenschicht 101 kann insbesondere Acrylnitril-Butadien-Kautschuk (NBR), Naturkautschuk (NR), Ethylen-Propylen-Dien-Kautschuk (EPDM), Isobuten-Isopren-Kautschuk (IIR), Methyl-Vinyl-Silikon-Kautschuk (VMQ) und/oder einen flexiblen Fluorthermoplast (THV) aus thermoplastischem Elastomer (TPE), Hexafluorpropylen (HFP) und Polyvinylidenfluorid (VDF) umfassen.

Die Schlauchaußenschicht 103 ist aus einem Kunststoff geformt, wobei der Kunststoff der Schlauchaußenschicht 103 ein Elastomer, ein thermoplastisches Elastomer (TPE) und/oder ein thermoplastisches Elastomer-Vulkanisat (TPE-V) umfasst.

Der Kunststoff der Schlauchaußenschicht 103 kann insbesondere Acrylnitril-Butadien-Kautschuk (NBR), Styrol-Butadien-Kautschuk (SBR), Naturkautschuk (NR), Ethylen-Propylen-Dien-Kautschuk (EPDM), Chloropren-Kautschuk (CR), Methyl-Vinyl-Silikon-Kautschuk (VMQ) und/oder Epichlorhydrin-Kautschuk (ECO) umfassen.

Insbesondere weist der Fluidschlauch 100 eine Schlauchinnenschicht 101 aus Acrylnitril-Butadien-Kautschuk (NBR) und eine Schlauchaußenschicht 103 aus Acrylnitril-Butadien-Kautschuk (NBR) auf.

Alternativ und insbesondere weist der Fluidschlauch 100 eine Schlauchinnenschicht 101 aus Acrylnitril-Butadien-Kautschuk (NBR) und eine Schlauchaußenschicht 103 aus Styrol-Butadien-Kautschuk (SBR) auf.

Alternativ und insbesondere weist der Fluidschlauch 100 eine Schlauchinnenschicht 101 aus Naturkautschuk (NR) und eine Schlauchaußenschicht 103 aus Naturkautschuk (NR) auf. Alternativ und insbesondere weist der Fluidschlauch 100 eine Schlauchinnenschicht 101 aus Ethylen-Propylen-Dien-Kautschuk (EPDM) und eine Schlauchaußenschicht 103 aus Ethylen-Propylen-Dien-Kautschuk (EPDM) auf.

Alternativ und insbesondere weist der Fluidschlauch 100 eine Schlauchinnenschicht 101 aus Isobuten-Isopren-Kautschuk (IIR) und eine Schlauchaußenschicht 103 aus Chloropren-Kautschuk (CR) auf.

Alternativ und insbesondere weist der Fluidschlauch 100 eine Schlauchinnenschicht 101 aus Isobuten-Isopren-Kautschuk (IIR) und eine Schlauchaußenschicht 103 aus Styrol-Butadien-Kautschuk (SBR) auf.

Alternativ und insbesondere weist der Fluidschlauch 100 eine Schlauchinnenschicht 101 aus Isobuten-Isopren-Kautschuk (IIR) und eine Schlauchaußenschicht 103 aus Naturkautschuk (NR) auf.

Alternativ und insbesondere weist der Fluidschlauch 100 eine Schlauchinnenschicht 101 aus Methyl-Vinyl-Silikon-Kautschuk (VMQ) und eine Schlauchaußenschicht 103 aus Methyl-Vinyl-Silikon-Kautschuk (VMQ) auf.

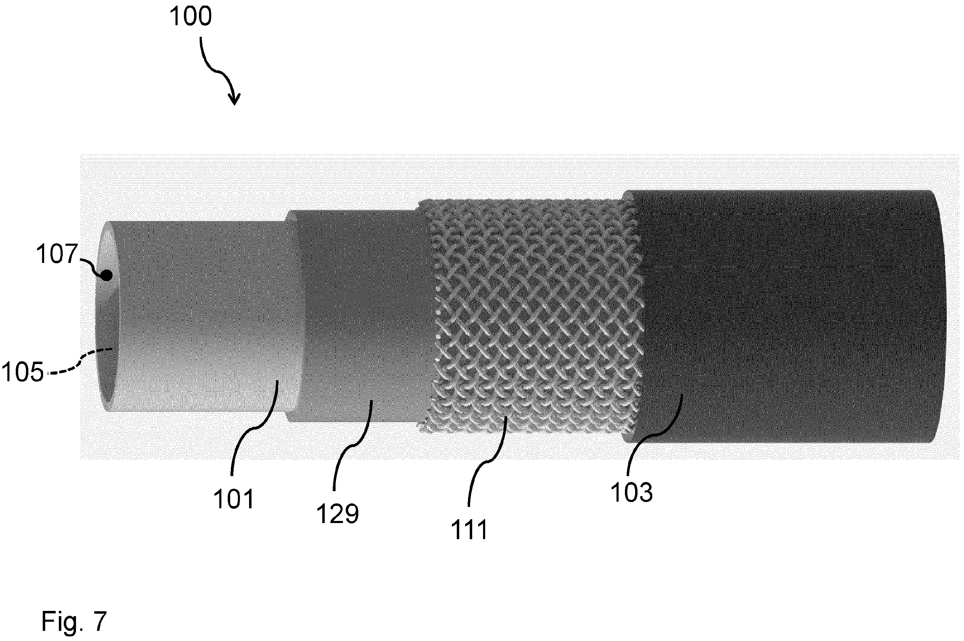

Fig. 7 zeigt eine schematische Ansicht eines Fluidschlauchs gemäß einer vierten Ausführungsform.

Ebenso wie der in der dritten Ausführungsform gemäß der Fig. 6 gezeigte Fluidschlauch 100 weist auch der Fluidschlauch 100 gemäß der Fig. 7 eine Schlauchinnenschicht 101, eine Schlauchaußenschicht 103 und einen zwischen der Schlauchinnenschicht 101 und der Schlauchaußenschicht 103 angeordneten Festigkeitsträger 111 auf.

Zusätzlich weist der in der Fig. 7 gezeigte Fluidschlauch 100 noch eine zweite Zwischenschicht 129 auf, welche zwischen der Schlauchinnenschicht 101 und der Schlauchaußenschicht 103 angeordnet ist.

Für die Materialien der Schlauchinnenschicht 101, der Schlauchaußenschicht 103 und des Festigkeitsträgers 111 wird auf die Ausführungen zum Fluidschlauch 100 gemäß der Fig. 6 verwiesen.

Das Material der zweiten Zwischenschicht 129 umfasst ein Elastomer, ein thermoplastisches Elastomer (TPE) und/oder ein thermoplastisches Elastomer-Vulkanisat (TPE-V).

Insbesondere kann das Material der zweiten Zwischenschicht 129 ferner Acrylnitril-Butadien-Kautschuk (NBR) und/oder Epichlorhydrin-Kautschuk (ECO) umfassen.

Insbesondere weist der Fluidschlauch 100 eine Schlauchinnenschicht 101 aus flexiblen Fluorthermoplast (THV) aus thermoplastischem Elastomer (TPE), Hexafluorpropylen (HFP) und Polyvinylidenfluorid (VDF), eine zweite Zwischenschicht 129 aus Acrylnitril-Butadien-Kautschuk (NBR) oder Epichlorhydrin-Kautschuk (ECO), und eine Schlauchaußenschicht 103 aus Acrylnitril-Butadien-Kautschuk (NBR) oder Epichlorhydrin-Kautschuk (ECO) auf.

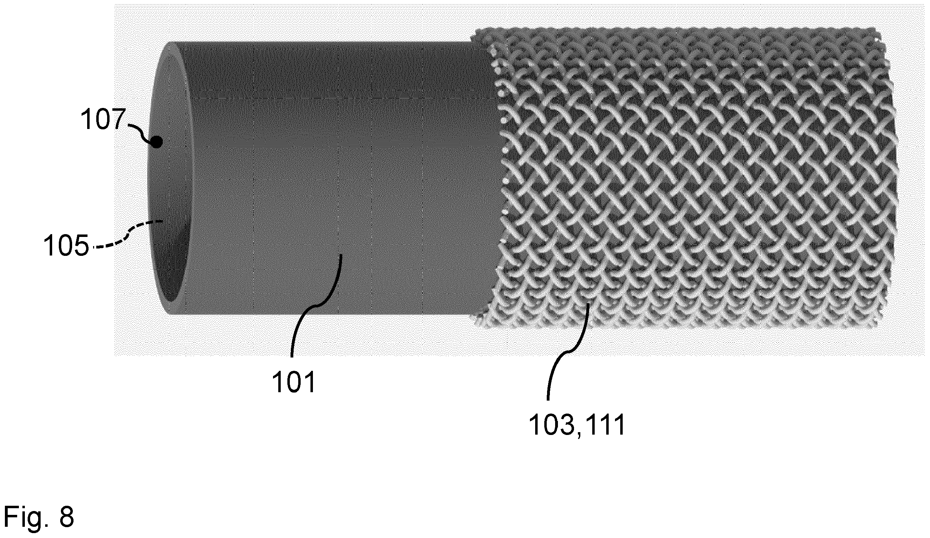

Fig. 8 zeigt eine schematische Ansicht eines Fluidschlauchs gemäß einer fünften Ausführungsform.

Der in Fig. 8 dargestellte zweilagige Fluidschlauch gemäß der fünften Ausführungsform weist eine aus Kunststoff geformte Schlauchinnenschicht 101 und eine als ein Festigkeitsträger 111 ausgebildet Schlauchaußenschicht 103 auf.

Für die mögliche Auswahl der Materialien der aus Kunststoff geformten Schlauchinnenschicht 101 wird auf die vorangehenden Ausführungen verwiesen. Für die mögliche Auswahl der Materialien der als ein Festigkeitsträger 111 geformten Schlauchaußenschicht 103 wird auf die vorangehenden Ausführungen in Bezug auf die Materialien des Festigkeitsträgers 111 verwiesen.

Alle in Verbindung mit einzelnen Ausführungsformen der Anmeldung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Anmeldung ist durch die Ansprüche gegeben und wird durch die in der Beschreibung erläuterten oder den Figuren gezeigten Merkmale nicht beschränkt.

### BEZUGSZEICHENLISTE

- 100: Fluidschlauch
- 101: Schlauchinnenschicht
- 101-1: Innenoberfläche der Schlauchinnenschicht
- 103: Schlauchaußenschicht
- 105: Innenraum des Fluidschlauchs
- 106: Matrixaufnahmen
- 107: Oberflächen-modifizierende Substanz
- 108: Kunststoff-Matrix
- 109: Bereich der Schlauchinnenschicht
- 111: Festigkeitsträger
- 113: Abszissenachse
- 115: Ordinatenachse
- 117: Erste Kurve
- 119: Zweite Kurve
- 121: Dritte Kurve
- 123: Vierte Kurve
- 125: PCA-Agarplatte
- 127: Bakterienkolonie
- 129: Zwischenschicht
- 200: Verfahren zum Herstellen eines Fluidschlauchs
- 201: Verfahrensschritt: Bereitstellen von einem Kunststoff
- 203: Verfahrensschritt: Bereitstellen von einer Oberflächen-modifizierenden Substanz
- 205: Verfahrensschritt: Mischen des Kunststoffs mit der Oberflächen-modifizierenden Substanz
- 207: Verfahrensschritt: Schmelzen der Mischung
- 209: Verfahrensschritt: Extrudieren der Kunststoffschmelze
- 211: Verfahrensschritt: Bereitstellen von einem weiteren Kunststoff.
- 213: Verfahrensschritt: Schmelzen des weiteren Kunststoffs, um eine weitere Kunststoffschmelze zu erhalten.
- 215: Verfahrensschritt: Extrudieren der weiteren Kunststoffschmelze

## Patentansprüche

1. Fluidschlauch (100) zum Leiten von Fluid,
wobei der Fluidschlauch (100) als ein zumindest zweilagiger Fluidschlauch (100) ausgebildet ist, welcher eine Schlauchinnenschicht (101) und eine Schlauchaußenschicht (103) aufweist,
wobei die Schlauchinnenschicht (101) einen Innenraum (105) des Fluidschlauchs (100) zur Aufnahme von Fluid umschließt, wobei die Schlauchinnenschicht (101) eine dem Innenraum (105) des Fluidschlauchs (100) zugewandte Innenoberfläche (101-1) aufweist,
wobei die Schlauchinnenschicht (101) aus einem Kunststoff geformt ist, wobei innerhalb des Kunststoffs eine Oberflächen-modifizierende Substanz (107) diffusionsstabil eingebettet ist; und
wobei die Oberflächen-modifizierende Substanz (107) ausgebildet ist, eine Oberflächeneigenschaft der Innenoberfläche (101-1) der Schlauchinnenschicht (101) zu verändern, um eine Besiedelung der Innenoberfläche (101-1) durch Mikroorganismen zu verhindern.

2. Fluidschlauch (100) nach Anspruch 1, wobei die Oberflächen-modifizierende Substanz (107) eine Oberflächen-polarisierende Substanz (107) umfasst, welche ausgebildet ist, eine Polarisation der Innenoberfläche (101-1) der Schlauchinnenschicht (101) zu verändern, um eine Besiedelung der Innenoberfläche (101-1) durch Mikroorganismen zu verhindern, wobei die Oberflächen-polarisierende Substanz (107) insbesondere eine Sterion-Substanz umfasst.

3. Fluidschlauch (100) nach Anspruch 1 oder 2, wobei die Oberflächen-modifizierende Substanz (107), insbesondere Oberflächen-polarisierende Substanz (107), eine metallorganische Verbindung umfasst, wobei die metallorganische Verbindung insbesondere eine Kupfer-Thiolat-Verbindung umfasst.

4. Fluidschlauch (100) nach einem der vorangehenden Ansprüche, wobei die Oberflächen-modifizierende Substanz (107), insbesondere Oberflächen-polarisierende Substanz (107), in der Schlauchinnenschicht (101) in einem Konzentrationsbereich von 0,01 Gew.-% bis 1 Gew.-%, insbesondere von 0,025 Gew.-% bis 0,1 Gew.-% vorhanden ist.

5. Fluidschlauch (100) nach einem der vorangehenden Ansprüche, wobei die Oberflächen-modifizierende Substanz (107) in die gesamte aus Kunststoff geformte Schlauchinnenschicht (101) eingebettet ist, oder
wobei die Oberflächen-modifizierende Substanz (107) in einem der Innenoberfläche (101-1) zugewandten Bereich (109) der aus Kunststoff geformten Schlauchinnenschicht (101) eingebettet ist, wobei insbesondere der Bereich (109) durch die Innenoberfläche (101-1) begrenzt ist und sich von der Innenoberfläche (101-1) aus in Richtung der Schlauchaußenschicht (103) erstreckt.

6. Fluidschlauch (100) nach einem der vorangehenden Ansprüche, wobei die aus einem Kunststoff geformte Schlauchinnenschicht (101) eine Kunststoff-Matrix (108) aufweist, in welcher die Oberflächen-modifizierende Substanz (107) diffusionsstabil eingebettet ist, wobei die Kunststoff-Matrix (108) ausgebildet ist, ein Abgeben der Oberflächen-modifizierenden Substanz (107) in das durch den Fluidschlauch (100) durchleitbare Fluid zu reduzieren, insbesondere zu verhindern.

7. Fluidschlauch (100) nach einem der vorangehenden Ansprüche, wobei der Kunststoff der Schlauchinnenschicht (101) ein Elastomer, ein thermoplastisches Elastomer (TPE), ein thermoplastisches Elastomer-Vulkanisat (TPE-V), Acrylnitril-Butadien-Kautschuk (NBR), Naturkautschuk (NR), Ethylen-Propylen-Dien-Kautschuk (EPDM), Isobuten-Isopren-Kautschuk (IIR), Methyl-Vinyl-Silikon-Kautschuk (VMQ) und/oder einen flexiblen Fluorthermoplast (THV) aus thermoplastischem Elastomer (TPE), Hexafluorpropylen (HFP) und Polyvinylidenfluorid (VDF) umfasst, wobei der Kunststoff der Schlauchinnenschicht (101) insbesondere ein peroxidisch vernetztes thermoplastisches Elastomer-Vulkanisat (TPE-V) umfasst.

8. Fluidschlauch (100) nach einem der vorangehenden Ansprüche, wobei die Schlauchaußenschicht (103) aus einem Kunststoff geformt ist, wobei der Kunststoff der Schlauchaußenschicht (103) ein Elastomer, ein thermoplastisches Elastomer (TPE), ein thermoplastisches Elastomer-Vulkanisat (TPE-V), Acrylnitril-Butadien-Kautschuk (NBR), Styrol-Butadien-Kautschuk (SBR), Naturkautschuk (NR), Ethylen-Propylen-Dien-Kautschuk (EPDM), Chloropren-Kautschuk (CR), Methyl-Vinyl-Silikon-Kautschuk (VMQ) und/oder Epichlorhydrin-Kautschuk (ECO) umfasst.

9. Fluidschlauch (100) nach einem der vorangehenden Ansprüche, wobei die Fluidschlauch (100) zumindest einen Festigkeitsträger (111) aufweist, welcher zwischen der Schlauchaußenschicht (103) und der Schlauchinnenschicht (101) angeordnet ist.

10. Fluidschlauch (100) nach Anspruch 9, wobei der Festigkeitsträger (111) als ein einlagiger oder mehrlagiger Festigkeitsträger (111) ausgebildet ist, und wobei der Festigkeitsträger (111) insbesondere ein Gewebe, Gewirk, Geflecht, Gestrick und/oder eine spiralisierte Textileinlage aufweist.

11. Fluidschlauch (100) nach Anspruch 9 oder 10, wobei der Festigkeitsträger (111) aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon, aufweist.

12. Fluidschlauch (100) nach einem der Ansprüche 9, 10 oder 11, wobei der Fluidschlauch (100) eine erste Zwischenschicht aufweist, welche zwischen der Schlauchaußenschicht (103) und dem Festigkeitsträger (111) angeordnet ist, und/oder wobei der Fluidschlauch (100) eine zweite Zwischenschicht (129) aufweist, welche zwischen der Schlauchinnenschicht (101) und dem Festigkeitsträger (111) angeordnet ist.

13. Fluidschlauch (100) nach Anspruch 12, wobei die erste Zwischenschicht und/oder zweite Zwischenschicht (129) ein Elastomer, ein thermoplastisches Elastomer (TPE), ein thermoplastisches Elastomer-Vulkanisat (TPE-V), Acrylnitril-Butadien-Kautschuk (NBR), Styrol-Butadien-Kautschuk (SBR), Naturkautschuk (NR), Ethylen-Propylen-Dien-Kautschuk (EPDM), Chloropren-Kautschuk (CR), Methyl-Vinyl-Silikon-Kautschuk (VMQ) und/oder Epichlorhydrin-Kautschuk (ECO) umfasst.

14. Fluidschlauch (100) nach einem der vorangehenden Ansprüche, wobei die Schlauchinnenschicht (101) einen Dicke von 0,2 mm bis 2 mm aufweist, bevorzugt 0,2 mm bis 1 mm, weiter bevorzugt 0,2 mm bis 0,5 mm, noch weiter bevorzugt 0,2 mm.

15. Verfahren (200) zum Herstellen eines zumindest zweilagigen Fluidschlauchs (100), wobei das Verfahren (200) die folgenden Verfahrensschritte umfasst:
Bereitstellen (201) von einem Kunststoff;
Bereitstellen (203) von einer Oberflächen-modifizierenden Substanz (107);
Mischen (205) des Kunststoffs mit der Oberflächen-modifizierenden Substanz (107) auf einem spezifischen Trägermaterial, um eine optimale Verteilung und Dosierung der Oberflächen-modifizierenden Substanz (107) sicherzustellen;
Schmelzen (207) der Mischung umfassend den Kunststoff und die Oberflächen-modifizierende Substanz (107), um eine Kunststoffschmelze zu erhalten;
Extrudieren (209) der Kunststoffschmelze, um eine Schlauchinnenschicht (101) aus Kunststoff zu erhalten, wobei innerhalb des Kunststoffs die Oberflächen-modifizierende Substanz (107) diffusionsstabil eingebettet ist;
Bereitstellen (211) von einem weiteren Kunststoff;
Schmelzen (213) des weiteren Kunststoffs, um eine weitere Kunststoffschmelze zu erhalten;
Extrudieren (215) der weiteren Kunststoffschmelze, um eine radial außerhalb auf der Schlauchinnenschicht (101) angeordnete Schlauchaußenschicht (103) zu erhalten, und den zumindest zweilagigen Fluidschlauch (100) herzustellen.
